# EUROPÄISCHE PATENTSCHRIFT

(11) **EP 2 593 582 B1**
(45) Veröffentlichungstag und Bekanntmachung des Hinweises auf die Patenterteilung: **25.06.2014**
(21) Anmeldenummer: 11730287.7
(22) Anmeldetag: 05.07.2011
(51) Int. Cl.: C23C 28/00, C23C 28/04, F01D 5/28

(54) **PORÖSES KERAMISCHES SCHICHTSYSTEM**
POROUS CERAMIC COATING SYSTEM
SYSTÈME STRATIFIÉ CÉRAMIQUE POREUX

(30) Priorität: 14.07.2010 EP 10007240
(43) Veröffentlichungstag der Anmeldung: 22.05.2013
(73) Patentinhaber: Siemens Aktiengesellschaft, 80333 München (DE)
(72) Erfinder: STAMM, Werner, 45481 Mülheim an der Ruhr (DE)
(86) Internationale Anmeldenummer: PCT/EP2011/061320
(87) Internationale Veröffentlichungsnummer: WO 2012/007320

(56) Entgegenhaltungen:
- EP-A1- 2 128 306
- EP-A1- 2 230 329
- EP-A1- 2 341 166
- WO-A1-2007/112783
- PORTINHA A ET AL: "Characterization of thermal barrier coatings with a gradient in porosity", SURFACE AND COATINGS TECHNOLOGY, ELSEVIER, AMSTERDAM, NL LNKD- DOI:10.1016/J.SURFCOAT.2004.07.094, Bd. 195, Nr. 2-3, 31. Mai 2005 (2005-05-31), Seiten 245-251, XP004842144, ISSN: 0257-8972

## Beschreibung

Die Erfindung betrifft ein Schichtsystem mit zwei unter-schiedlichen porösen keramischen Schichten.

Keramische Schutzschichten werden oft bei Bauteilen im Hoch-temperatureinsatz verwendet, um das metallische Substrat vor höheren Temperaturen zu schützen.

Dabei weisen die keramischen Schichten eine gewisse Porosität auf, um zum einen die Wärmeleitfähigkeit zu verringern und um eine gewisse Duktilität einzustellen.

Die WO 2007/112783 A1 offenbart ein keramisches Wärmedämmschichtsystem, bei dem große Porositätsunterschiede in den zwei keramischen Schichten verwendet werden.

Die EP 2 128 306 A behandelt ein zweilagiges keramisches Schichtsystem, bei dem die Schichtdicken im Verhältnis zu den keramischen Wärmedämmschichten lokal verändert werden.

In der Veröffentlichung in Surface and Coatings Technology, Elsevier, Bnd. 195 Nr. 2-3 (2005) Seiten 245-251 von A. Portinha et al. mit dem Titel: "Characterization of thermal barrier coatings with a gradient in porosity" werden Porositäten von 12% bis 17% in einer gradierten Porositätsverteilung beschrieben.

Es ist Aufgabe der Erfindung, die thermischen und die mechanischen Eigenschaften zu optimieren.

Die Aufgabe wird gelöst durch ein Schichtsystem gemäß Anspruch 1.

In den Unteransprüchen sind weitere vorteilhafte Maßnahmen aufgelistet, die beliebig miteinander kombiniert werden können.

Es zeigen
- Figur 1: ein Schiehtsystem,
- Figur 2: eine Gasturbine,
- Figur 3: eine Turbinenschaufel,
- Figur 4: eine Brennkammer,
- Figur 5: eine Liste von Superlegierungen.

Die Beschreibung und Figuren stellen nur Ausführungsbeispiele der Erfindung dar.

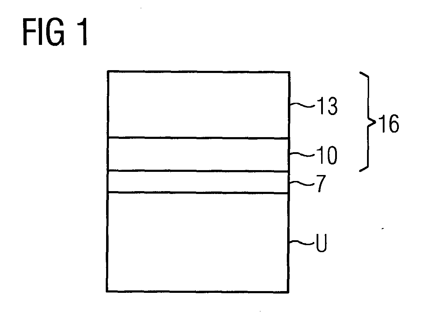

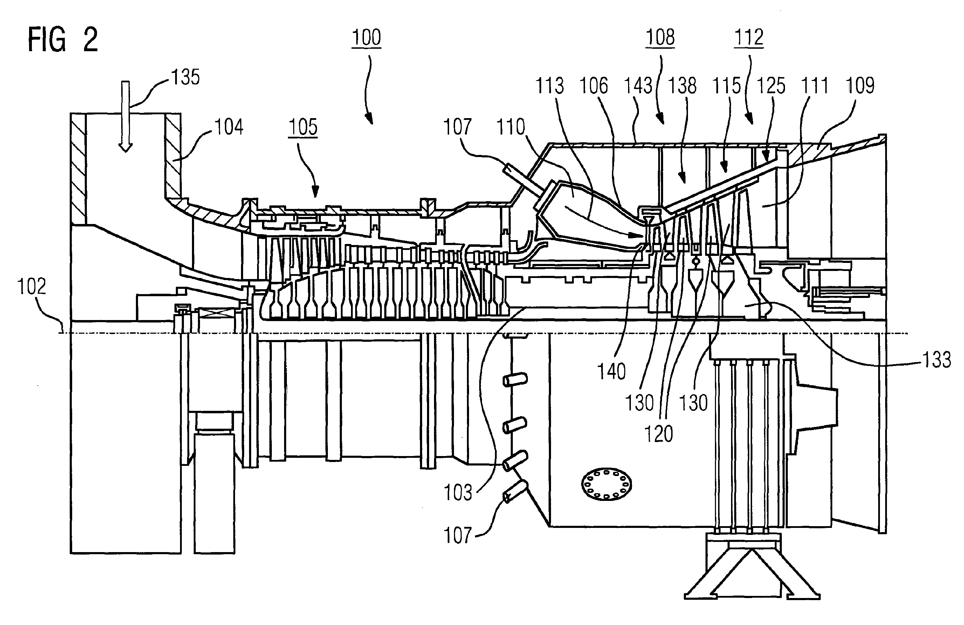

In Figur 1 ist das Schichtsystem schematisch dargestellt. Das Schichtsystem 1 ist vorzugsweise eine Turbinenschaufel 120, 130 einer Turbine, einer Dampfturbine, einer Gasturbine 100 (Fig. 2), für den stationären Betrieb oder für Flugzeuge.

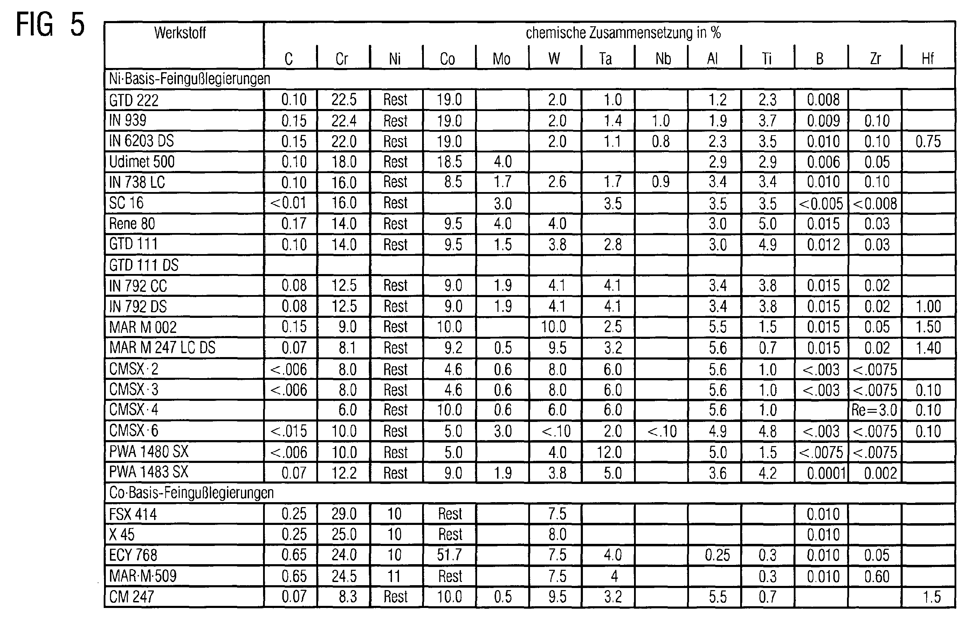

Vorzugsweise weist das Substrat 4 eine nickel- oder kobaltbasierte Superlegierung aus einer Legierung der Figur 5 auf. Vorzugsweise ist dies eine hickelbasierte Superlegierung.

Auf dem Substrat 4 ist vorzugsweise eine metallische Anwendungsschicht, insbesondere des Typs MCrAl oder MCrAlX vorhanden (M= Ni, Co, Fe, vorzugsweise Ni, Co).

Ebenso kann es Diffusionsschichten innerhalb des Substrats 4 geben, auf denen eine keramische Schicht 16 aufgebracht werden kann.

Auf die metallische Schicht 7 oder auf das Substrat 4 wird eine keramische Schicht 16 aufgebracht, wobei an der Schnittstelle entweder eine Oxidschicht (TGO) bewusst erzeugt oder aufgebracht wird, sich während der keramischen Beschichtung oder während des Betriebs eines Schichtsystems mit der metallischen Schicht 7 bildet.

Die keramische Schicht 16 weist zumindest zwei, insbesondere nur zwei unterschiedliche keramische Schichten 10, 13 auf. Die untere keramische Schicht 10 weist eine geringere Porosität als die äußere keramische Schicht 13 auf. Die Porosität der unteren keramischen Schicht 10 liegt bei 11% bis 12% (vorzugsweise vol%).

Vorzugsweise ist die Schichtdicke der inneren keramischen Schicht 10 mindestens 10%, insbesondere 20%, ganz insbesondere 50% dünner ausgebildet als die der äußeren keramischen Schicht 13. Die untere Schicht hat eine Dicke von 100±25µm, während die äußere Schicht eine Dicke von >100µm aufweist.

Die äußere keramische Schicht 13 weist eine Porosität von 16% bis 18% auf und stellt vorzugsweise die äußerste Schicht dar, die dem Heißgas direkt ausgesetzt ist.

Das Material der unteren keramischen Schicht 10 ist teilweise, insbesondere Yttrium-stabilisiertes Zirkonoxid. Vorzugsweise wird dieses Material auch für die äußere keramische Schicht 13 verwendet, wobei aber auch ein Pyrochlormaterial verwendet werden kann.

Die Porositätsauswahl der keramischen Schichten führte erstaunlicherweise zu einer längeren Lebensdauer gegenüber einer gleichdicken hochporösen Schicht.

Die Figur 2 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

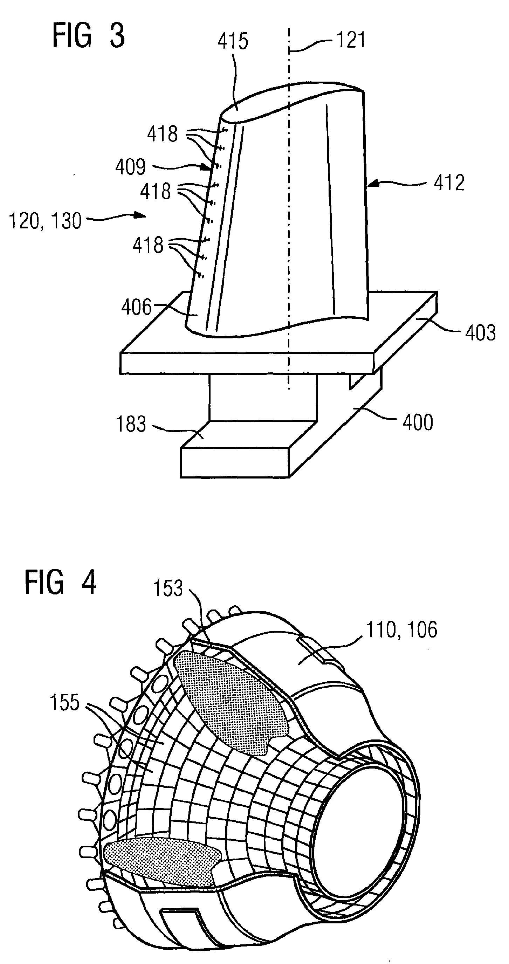

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem
aufweisend
ein Substrat (4),
optional eine metallische Anbindungsschicht (7) auf dem Substrat (4),
optional eine Oxidschicht auf der Anbindungsschicht (7) oder auf dem Substrat (4),
eine innere keramische Schicht (10) mit einer Porosität von 11% - 12%,
und einer äußersten keramischen Schicht (13) mit einer Porosität von 16% bis 18% auf der inneren keramischen Schicht (10).

2. Schichtsystem nach Anspruch 1,
bei dem die metallische Anbindungsschicht (7) eine MCrAl-oder MCrAlX-Legierung aufweist.

3. Schichtsystem nach Anspruch 1 oder 2,
bei dem das Material der unteren keramischen Schicht (10) Zirkonoxid aufweist.

4. Schichtsystem nach Anspruch 1, 2 oder 3,
bei dem die äußere Schicht (13) Zirkonoxid aufweist.

5. Schichtsystem nach Anspruch 1, 2, 3 oder 4,
bei dem das Substrat (4) eine nickel- oder kobaltbasierte Superlegierung aufweist.

6. Schichtsystem nach Anspruch 1, 2, 3, 4 oder 5,
bei dem das Material der keramischen Schichten (10, 13) verschieden ist.

7. Schichtsystem nach Anspruch 1, 2, 3, 4, 5 oder 6, bei dem die innere keramische Schicht (10) mindestens 10% dünner ausgebildet ist als die äußerste keramische Schicht (13).

8. Schichtsystem nach Anspruch 1, 2, 3, 4, 5, 6 oder 7, bei dem das Schichtsystem besteht aus :
Substrat (4),
optional metallischer Anbindungsschicht (7),
optional Oxidschicht auf der Anbindungsschicht (7),
innerer keramische Schicht (10),
äußerster keramische Schicht (13).

## Claims

1. Layer system
comprising
a substrate (4),
optionally a metallic bonding layer (7) on the substrate (4),
optionally an oxide layer on the bonding layer (7) or on the substrate (4),
an inner ceramic layer (10) having a porosity of 11% - 12% and an outermost ceramic layer (13)
having a porosity of 16% to 18%
on the inner ceramic layer (10).

2. Layer system according to Claim 1,
wherein the metallic bonding layer (7) comprises an MCrAl or MCrAlX alloy.

3. Layer system according to Claim 1 or 2,
wherein the material of the lower ceramic layer (10) comprises zirconium oxide.

4. Layer system according to Claim 1, 2 or 3,
wherein the outer layer (13) comprises zirconium oxide.

5. Layer system according to Claim 1, 2, 3 or 4,
wherein the substrate (4) comprises a nickel-based or cobalt-based superalloy.

6. Layer system according to Claim 1, 2, 3, 4 or 5,
wherein the material of the ceramic layers (10, 13) is different.

7. Layer system according to Claim 1, 2, 3, 4, 5 or 6,
wherein the inner ceramic layer (10) has a form which is at least 10% thinner than the outermost ceramic layer (13).

8. Layer system according to Claim 1, 2, 3, 4, 5, 6 or 7, wherein the layer system consists of:
substrate (4),
optionally metallic bonding layer (7),
optionally oxide layer on the bonding layer (7),
inner ceramic layer (10),
outermost ceramic layer (13).

## Revendications

1. Système stratifié
comprenant
un substrat (4),
éventuellement une couche (7) métallique de liaison sur le substrat (4),
éventuellement une couche d'oxyde sur la couche (7) de liaison ou sur le substrat (4),
une couche (10) intérieure en céramique d'une porosité de 11% à 12%,
et une couche (13) la plus à l'extérieure en céramique d'une porosité de 16% à 18% sur la couche (10) intérieure en céramique.

2. Système stratifié suivant la revendication 1,
dans lequel la couche (7) métallique de liaison comprend un alliage McrAl ou McrAlX.

3. Système stratifié suivant la revendication 1 ou 2,
dans lequel la matière de la couche (10) inférieure en céramique comprend de l'oxyde de zirconium.

4. Système stratifié suivant la revendication 1, 2, ou 3,
dans lequel la couche (13) extérieure comprend de l'oxyde zirconium.

5. Système stratifié suivant la revendication 1, 2, 3 ou 4
dans lequel le substrat (4) comprend un superalliage à base de nickel ou à base de cobalt.

6. Système stratifié suivant la revendication 1, 2, 3, 4 ou 5, dans lequel les matières des couches (10 , 13) en céramique sont différentes.

7. Système stratifié suivant la revendication 1, 2, 3, 4, 5 ou 6,
dans lequel la couche (10) intérieure en céramique est plus mince d'au moins 10% que la couche (13) la plus extérieure en céramique.

8. Système stratifié suivant la revendication 1, 2, 3, 4, 5, 6 ou 7,
dans lequel le système stratifié est constitué de :
un substrat (4),
éventuellement une couche (7) métallique de liaison,
éventuellement une couche d'oxyde sur la couche (7) de liaison,
une couche (13) intérieure en céramique,
une couche (13) la plus à l'extérieure en céramique.
